# EUROPEAN PATENT APPLICATION

(11) **EP 4 607 913 A1**
(43) Date of publication of application: **27.08.2025**
(21) Application number: 22962794.8
(22) Date of filing: 21.10.2022
(51) Int. Cl.: H04N 7/18, G06F 9/00, G06T 7/00

(54) **INFORMATION PROCESSING DEVICE, INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: SUGAWARA, Satoshi, Tokyo 108-8001 (JP); OHUCHI, Mariko, Tokyo 108-8001 (JP); YAMAOKA, Kazuhiko, Tokyo 108-8001 (JP); OHTA, Tomomi, Tokyo 108-8001 (JP); ISHII, Nobuaki, Tokyo 108-8001 (JP)
(74) Representative: Betten & Resch
(86) International application number: PCT/JP2022/039310
(87) International publication number: WO 2024/084687

(57) **Abstract**

An information processing apparatus includes: a display; a left camera that is provided on a left side of the display and that captures images of a target from the left side; a right camera that is provided on a right side of the display and that captures images of the target from the right side; an upper camera that is provided on un upper side the display and that captures images of the target from the upper side; and a monitoring camera that is provided on the upper side the display and that monitors the target from the upper side.

## Description

### Technical Field

This disclosure relates to technical fields of an information processing apparatus, an information processing system, an information processing method, and a recording medium.

### Background Art

Patent Literature 1 describes an information processing apparatus reads information about the target, the information processing apparatus including: a reader that has an inclined reading surface and reads information from a target opposed to the reading surface; and a projection formed on at least a part of an upper edge part of a peripheral edge part of the reading surface.

Patent Literature 2 describes a technique/technology in which a plurality of displays are arranged with a predetermined gap behind a half-mirror, in which a camera lens is disposed in this gap, so that a line of sight for viewing the displays and a line of sight for taking photographs with a camera are set almost the same, and in which face images suitable for collation/verification are captured while the displays display images suitable for collation/verification to a person in front of the half-mirror.

Patent Literature 3 describes an information processing apparatus including: a reading unit that reads a medium of a user and acquires information including biometric information on the user from the medium; and a biometric information acquisition unit that acquires, from the user, biometric information on the user during reading of the medium.

Patent Literature 4 describes a technique/technology that takes into account hygiene and allows users to input data, and in which included are: a display that displays an operation screen; a contact-type sensor that detects an operation for the operation screen; a non-contact type sensor that detects an operation for the operation screen; and a control unit that selectively uses the contact-type sensor and the non-contact type sensor to receive an input to the operation screen.

Patent Literature 5 describes a technique/technology including: inputting a transmission image obtained by irradiating an article to be inspected with an electromagnetic wave to a model and outputting a first certainty factor that represents that the article is a specific article; and determining that the article is the specific article and detecting the specific article when the first certainty factor having been altered on the basis of an inspection result obtained by executing one or more inspections on the article is greater than or equal to a first certainty factor threshold set in advance.

### Citation List

### Patent Literature

Patent Literature 1: JP2019-153148A
Patent Literature 2: JP2019-149204A
Patent Literature 3: International Publication No. WO2020/075306
Patent Literature 4: JP2022-103098A
Patent Literature 5: International Publication No. WO2021/166727

### Summary

It is an example object of this disclosure to provide an information processing apparatus, an information processing system, an information processing method, and a recording medium that are intended to improve the techniques/technologies disclosed in Citation List.

### Solution to Problem

An information processing apparatus according to an example aspect includes: a display; a left camera that is provided on a left side of the display and that captures images of a target from the left side; a right camera that is provided on a right side of the display and that captures images of the target from the right side; an upper camera that is provided on an upper side the display and that captures images of the target from on the upper side; and a monitoring camera that is provided on the upper side the display and that monitors the target from the upper side.

An information processing system according to an example aspect includes: a plurality of information processing apparatuses, each including: a display; a left camera that is provided on a left side of the display and that captures images of a target from the left side; a right camera that is provided on a right side of the display and that captures images of the target from the right side; an upper camera that is provided on an upper side the display and that captures images of the target from the upper side; and a monitoring camera that is provided on the upper side the display and that monitors the target from the upper side, wherein the display provided in the information processing apparatus in which a number of targets included in images captured by the monitoring camera is greater than a predetermined value, outputs information indicating the information processing apparatus in which the number of targets included in the images captured by the monitoring camera is less than the predetermined value.

An information processing method according to an example aspect includes: determining a height of a face of a target; instructing a left camera and a right camera to capture images of the face of the target, in response to the height of the face of the target being lower than a predetermined height, the left camera being provided on a left side of a display and capturing images of the target from the left side, the right camera being provided on a right side of the display and capturing images of the target from the right side; and instructing an upper camera to capture images of the face of the target, in response to the height of the face of the target being higher than the predetermined height, the upper camera being provided on the upper side the display and capturing images of the target from the upper side.

A recording medium according to an example aspect is a recording medium on which a computer program that allows a computer to execute an information processing method is recorded, the information processing method including: determining a height of a face of a target; instructing a left camera and a right camera to capture images of the face of the target, in response to the height of the face of the target being lower than a predetermined height, the left camera being provided on a left side of a display and capturing images of the target from the left side, the right camera being provided on a right side of the display and capturing images of the target from the right side; and instructing an upper camera to capture images of the face of the target, in response to the height of the face of the target being higher than the predetermined height, the upper camera being provided on the upper side the display and capturing images of the target from the upper side.

### Brief Description of Drawings

[FIG. 1] FIG. 1 is an exterior view illustrating an external appearance of an information processing apparatus in a first example embodiment.
[FIG. 2] FIG. 2 is an exterior view illustrating an external appearance of an information processing apparatus in a second example embodiment.
[FIG. 3] FIG. 3 is a block diagram illustrating a configuration of the information processing apparatus in the second example embodiment.
[FIG. 4] FIG. 4 is a flowchart illustrating a flow of an information processing operation of the information processing apparatus in the second example embodiment.
[FIG. 5] FIG. 5 is a block diagram illustrating a configuration of an information processing apparatus in a third example embodiment.
[FIG. 6] FIG. 6 is an exterior view illustrating an external appearance of the information processing apparatus in the third example embodiment.
[FIG. 7] FIG. 7 is a block diagram illustrating a configuration of an information processing apparatus in a fourth example embodiment.
[FIG. 8A] FIG. 8A is an exterior view illustrating an external appearance of the information processing apparatus in the fourth example embodiment.
[FIG. 8B] FIG. 8B is an exterior view illustrating an external appearance of the information processing apparatus in the fourth example embodiment.
[FIG. 9] FIG. 9 is a block diagram illustrating a configuration of an information processing apparatus in a fifth example embodiment.
[FIG. 10] FIG. 10 is a flowchart illustrating a flow of an information processing operation of the information processing apparatus in the fifth example embodiment.
[FIG. 11] FIG. 11 is an exterior view illustrating an external appearance of an information processing apparatus in a sixth example embodiment.
[FIG. 12] FIG. 12 is a block diagram illustrating a configuration of the information processing apparatus in the sixth example embodiment.
[FIG. 13] FIG. 13 is a flowchart illustrating a flow of an information processing operation of the information processing apparatus in the sixth example embodiment.
[FIG. 14] FIG. 14 is a block diagram illustrating a configuration of an information processing apparatus in a seventh example embodiment.
[FIG. 15] FIG. 15 is a flowchart illustrating a flow of an information processing operation of the information processing apparatus in the seventh example embodiment.
[FIG. 16] FIG. 16 is a block diagram illustrating a configuration of an information processing apparatus in an eighth example embodiment.
[FIG. 17] FIG. 17 is a flowchart illustrating a flow of an information processing operation of the information processing apparatus in the eighth example embodiment.
[FIG. 18] FIG. 18 is a block diagram illustrating a configuration of an information processing system in a ninth example embodiment.

### Description of Example Embodiments

Hereinafter, with reference to the drawings, an information processing apparatus, an information processing system, an information processing method, and a recording medium according to example embodiments will be described.

### [1: First Example Embodiment]

An information processing apparatus, an information processing system, an information processing method, and a recording medium according to a first example embodiment will be described. The following describes the information processing apparatus, the information processing system, the information processing method, and the recording medium according to the first example embodiment, by using an information processing apparatus 1 to which the information processing apparatus, the information processing system, the information processing method, and the recording medium according to the first example embodiment are applied.

### [1-1: External Appearance of Information Processing Apparatus 1]

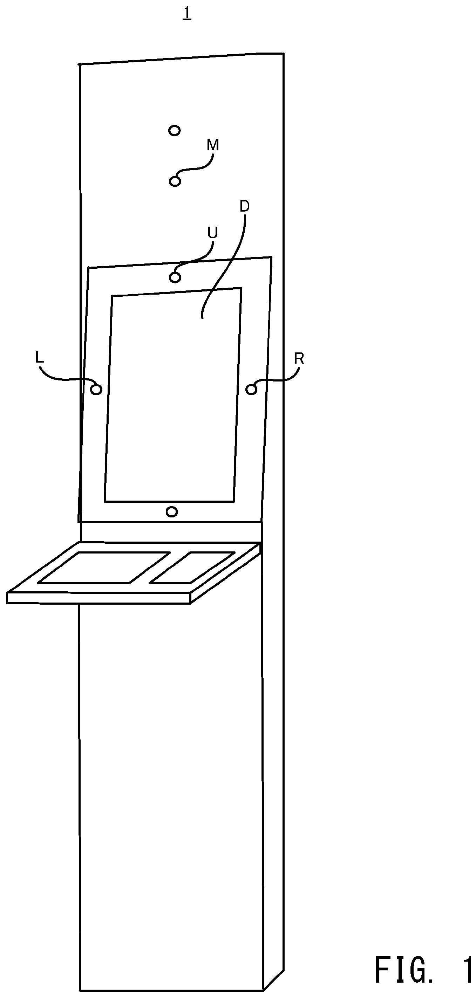

FIG. 1 is an exterior view illustrating the information processing apparatus 1 in the first example embodiment. As illustrated in FIG. 1, the information processing apparatus 1 includes a display D, a left camera L, a right camera R, an upper camera U, and a monitoring camera M.

The left camera L is provided on a left side of the display D and captures images of a target person from the left side. The left camera L is provided on the left side, as seen from the target person facing the display D. The right camera R is provided on a right side of the display D and captures images of the target person from the right side. The right camera R is provided on the right side, as seen from the target person facing the display D. The upper camera U is provided on the upper side the display D and captures images of the target person from the upper side. The monitoring camera M is provided on the upper side the display D and monitors the target person from the upper side. The upper camera U and the monitoring camera M are provided on the upper side the display D, as seen from the target person facing the display D. FIG. 1 illustrates a case where the monitoring camera M is provided on the upper side the upper camera U, but the upper camera U may be provided on the upper side the monitoring camera M.

### [1-2: Technical Effect of Information Processing Apparatus 1]

Since the information processing apparatus 1 in the first example embodiment includes the left camera L, the right camera R, and the upper camera U, it is possible to captures images of the target person from the left, right, and upper sides, and it is possible to acquire appropriate captured images of the target person. Since the information processing apparatus 1 captures images of the target person from various angles, the possibility of capturing a face image suitable for face authentication is improved. Furthermore, since the information processing apparatus 1 includes the monitoring camera M, it is possible to acquire images capturing the target person and a situation around the target person.

### [2: Second Example Embodiment]

Next, an information processing apparatus, an information processing system, an information processing method, and a recording medium according to a second example embodiment will be described. The following describes the information processing apparatus, the information processing system, the information processing method, and the recording medium according to the second example embodiment, by using an information processing apparatus 2 to which the information processing apparatus, the information processing system, the information processing method, and the recording medium according to the second example embodiment are applied.

### [2-1: External Appearance of Information Processing Apparatus 2]

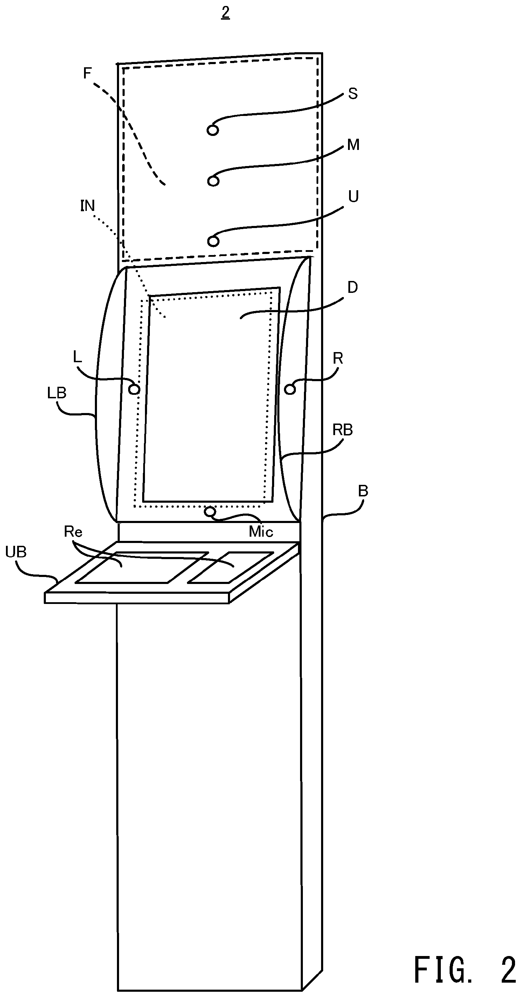

FIG. 2 is an exterior view of the information processing apparatus 2 in the second example embodiment. The information processing apparatus 2 may be installed in facilities such as airports, railway stations, and theme parks. The information processing apparatus 2 may perform an identification operation of identifying who is the target person, a guiding operation of guiding the identified target person to a destination, and a permission operation of permitting a predetermined action of the identified target person.

As illustrated in FIG. 2, the information processing apparatus 2 includes a support B and a top plate UB. The support B includes the display D, the left camera L, the right camera R, the upper camera U, the monitoring camera M, a left plate member LB, a right plate member RB, a reception unit IN, a speaker S, and a microphone Mic. The support B, however, may not include at least one of the left plate member LB, the right plate member RB, the reception unit IN, the speaker S, and the microphone Mic. An arithmetic apparatus 21, a storage apparatus 22, and a communication apparatus 23 described later may be housed in the support B.

The display D may be inclined at an angle to a vertical plane such that a lower part is closer to the target person than an upper part, so that the target person can look down and see display contents. Alternatively, the display D may be set up vertically. Alternatively, in a case where the target person is of short stature, or in a case where a face of the target person is at a low position, such as a case where the target person is in a wheelchair, the display D may be inclined at an angle to the vertical plane such that the upper part is closer to the target person than the lower part, so that the target person can look up and see the display contents. The information processing apparatus 2 may identify a position of the face of the target person, based on information acquired from at least one of the left camera L, the right camera R, the upper camera U, the monitoring camera M, and the microphone Mic, and may be allowed to change an inclination angle of the display D depending on the position of the face of the target person. For example, the display D may display a guidance screen for showing how to use the information processing apparatus 2.

The left camera L is provided on the left side of the display D and captures images of the target person from the left side. The right camera R is provided on the right side of the display D and captures images of the target person from the right side. An imaging surface of each of the left camera L and the right camera R is disposed inward so as to captures images of the target person facing the display D. The left camera L may be provided such that an image capture direction faces forward and diagonally to the right. The right camera R may be provided such that the image capture direction faces forward and diagonally to the left.

The upper camera U is provided on the upper side the display D and captures images of the target person from the upper side. The upper camera U may be provided such that the image capture direction faces forward and diagonally downward. At least one of the left camera L, the right camera R, and the upper camera U may have an angle of view that allows images of the face of the target person to be captured.

Lighting may be provided on the both sides of the display D. In this case, due to the lighting, at least one of the left camera L, the right camera R, and the upper camera U may ensure sufficient brightness when capturing images of the target person operating the information processing apparatus 2. The information processing apparatus 2 may perform face authentication by using the images of the face captured by at least one of the left camera L, the right camera R, and the upper camera U, and may authenticate the target person.

The monitoring camera M is provided on the upper side the display D. The monitoring camera M may be provided on the upper side the upper camera U. The monitoring camera M may capture images while changing an angle of view. The monitoring camera M may capture images of a relatively nearby area of the information processing apparatus 2. The monitoring camera M may acquire captured images that allows determination of a state of the information processing apparatus 2 and surrounding of the information processing apparatus 2, a state of the target person operating the information processing apparatus 2, and the like. In addition, the monitoring camera M may capture images of a relatively distant area of the information processing apparatus 2. The monitoring camera M may capture images that allows determination of a state of the target person located relatively far from the information processing apparatus 2.

A filter F may be provided on the upper side the display D. The target person may not be able to visually recognize the upper camera U, the monitoring camera M, and the speaker S, due to the filter F. The upper camera U and the monitoring camera M are configured to capture images of the target person through the filter F.

The left plate member LB is provided on a left side of the left camera L, and prevents the display contents of the display D from being viewed by anyone other than the target person and prevents anyone other than the target person from being captured in the images captured by the right camera R and the images captured by the upper camera U. The right plate member RB is provided on a right side of the right camera R, and prevents the display contents of the display D from being viewed by anyone other than the target person and prevents anyone other than the target person from being captured in the images captured by the left camera L and the images captured by the upper camera U.

The top plate UB is provided below the display D, protrudes toward the target person facing the display D, and has a reading unit Re on a top surface. The reading unit Re acquires information that is readable from a medium presented by the target person. The reading unit Re may read the medium held up by the target person and may acquire information. The reading unit Re may include, for example, an image scanner, a non-contact integrated circuit (IC) reader, an optical character reader (OCR) apparatus, and the like. The reading unit Re may realize at least one of a passport reader and a code reader. The code reader may be, for example, at least one of a two-dimensional code reader and a one-dimensional code reader. A code read by the code reader may be, for example, a code for customs declaration. The reading unit Re may include, for example, a passport reader on the left and a code reader on the right. The passport reader may have an alignment unit for aligning a passport.

The reception unit IN detects an instruction operation of the target person in a space between the display D and the target person, and receives it as an input of instructions to the information processing apparatus 2. The reception unit IN may be configured to detect a position on the display D pointed by the target person without the target person touching the display D. The reception unit IN may detect the instruction operation of the target person in the space between the display D and the target person, may associate the instruction operation of the target person with the display contents of the display D, and may receive the input of instructions to the information processing apparatus 2. The reception unit IN may realize an input operation to the information processing apparatus 2 such that the target person operates a touch panel without touching the information processing apparatus 2.

The reception unit IN may be realized by infrared rays. For example, the reception unit IN may include an infrared light irradiation mechanism that applies infrared rays, a position detection mechanism that detects a position at which the irradiated infrared rays are blocked, and a determination mechanism that determines that the detected position is selected on a screen.

The reception unit IN may be realized by laser light, instead of infrared rays. The reception unit IN may also analyze the position and movement from the captured images, thereby realizing the input operation to the information processing apparatus 2. The reception unit IN may also detect a change in electrostatic capacity in the space between the display D and the target person by using an electrostatic capacity method, thereby detecting the instruction operation of the target person.

The speaker S outputs audio/sound toward the target person. The speaker S may output the audio/sound with directionality. The speaker S may output the audio/sound such that information for the target person is not heard by anyone other than the target person.

The microphone Mic inputs voice/sound emitted by the target person. The microphone Mic may collect the voice/sound with directionality. The microphone Mic may collect the voice/sound so as not to pick up voice/sound of anyone other than the target person. Alternatively, the microphone Mic may also input voice/sound emitted by anyone other than the target person, noise, or the like, in addition to the voice/sound emitted by the target person

### [2-2: Configuration of Information Processing Apparatus 2]

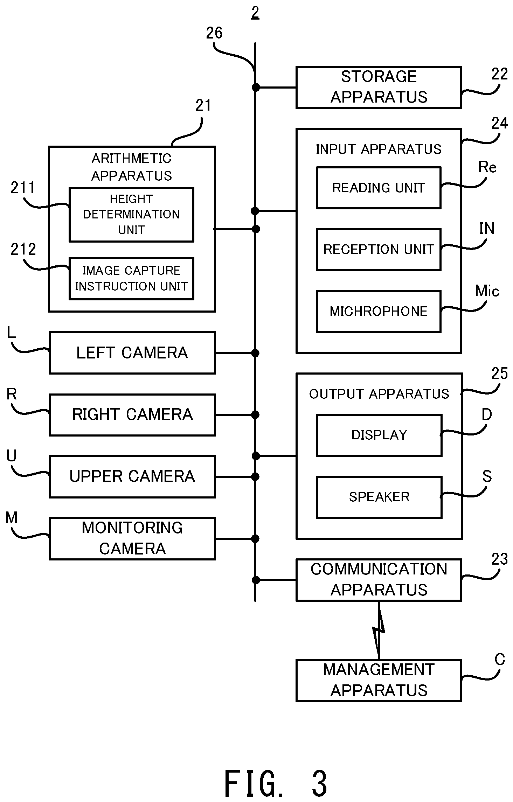

FIG. 3 is a block diagram illustrating a configuration of the information processing apparatus 2 in the second example embodiment. As illustrated in FIG. 3, the information processing apparatus 2 includes an arithmetic apparatus 21 and a storage apparatus 22. Furthermore, the information processing apparatus 2 may also include a communication apparatus 23, an input apparatus 24, and an output apparatus 25. The information processing apparatus 2, however, may not include at least one of the communication apparatus 23, the input apparatus 24, and the output apparatus 25. The arithmetic apparatus 21, the storage apparatus 22, the communication apparatus 23, the input apparatus 24, and the output apparatus 25 may be connected via a data bus 26.

The arithmetic apparatus 21 includes at least one of a CPU (Central Processing Unit), a GPU (Graphics Processing Unit), and a FPGA (Field Programmable Gate Array), for example. The arithmetic apparatus 21 reads a computer program. For example, the arithmetic apparatus 21 may read a computer program stored in the storage apparatus 22. For example, the arithmetic apparatus 21 may read a computer program stored in a computer-readable and non-transitory recording medium, by using a not-illustrated recording medium reading apparatus provided in the information processing apparatus 2 (e.g., the input apparatus 24 described later). The arithmetic apparatus 21 may acquire (i.e., download or read) a computer program from a not-illustrated apparatus disposed outside the information processing apparatus 2, via the communication apparatus 23 (or another communication apparatus). The arithmetic apparatus 21 executes the read computer program. Consequently, a logical functional block for performing an operation to be performed by the information processing apparatus 2 is realized in the arithmetic apparatus 21. That is, the arithmetic apparatus 21 is allowed to function as a controller for realizing the logical functional block for performing an operation (or, in other words, processing) to be performed by the information processing apparatus 2.

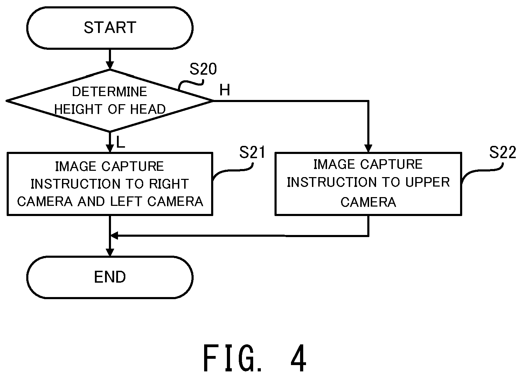

FIG. 3 illustrates an example of the logical functional block realized in the arithmetic apparatus 21 to perform an information processing operation. As illustrated in FIG. 3, a height determination unit 211 and an image capture instruction unit 212 that is a specific example of the "image capture instruction unit" described later in Supplementary Note, are realized in the arithmetic apparatus 21. At least one of the height determination unit 211 and the image capture instruction unit 212, however, may not be realized in the arithmetic apparatus 21. Details of operation of the height determination unit 211 and the image capture instruction unit 212 will be described in detail later with reference to FIG. 4.

The storage apparatus 22 is configured to store desired data. For example, the storage apparatus 22 may temporarily store a computer program to be executed by the arithmetic apparatus 21. The storage apparatus 22 may temporarily store data that are temporarily used by the arithmetic apparatus 21 when the arithmetic apparatus 21 executes the computer program. The storage apparatus 22 may store data that are stored for a long time by the information processing apparatus 2. The storage apparatus 22 may include at least one of a RAM (Random Access Memory), a ROM (Read Only Memory), a hard disk apparatus, a magneto-optical disk apparatus, a SSD (Solid State Drive), and a disk array apparatus. That is, the storage apparatus 22 may include a non-transitory recording medium.

The communication apparatus 23 is configured to communicate with an apparatus external to the information processing apparatus 2 via a not-illustrated communication network. The communication apparatus 23 may be a communication interface based on standards such as Ethernet (registered trademark), Wi-Fi (registered trademark), Bluetooth (registered trademark), and USB (Universal Serial Bus).

The input apparatus 24 is an apparatus that receives an input of information to the information processing apparatus 2 from an outside of the information processing apparatus 2. In the second example embodiment, the information processing apparatus 2 includes the reading unit Re, the reception unit IN, and the microphone Mic described above, as the input apparatus 24. Furthermore, for example, the input apparatus 24 may include an operating apparatus (e.g., at least one of a keyboard, a mouse, and a touch panel) that is operable by an operator of the information processing apparatus 2. In addition, for example, the input apparatus 24 may include a reading apparatus that is configured to read information recorded as data on a recording medium that is externally attachable to the information processing apparatus 2.

The output apparatus 25 is an apparatus that outputs information to the outside of the information processing apparatus 2. The output apparatus 25 may output information as an image. That is, the output apparatus 25 may include a display apparatus (a so-called display) that is configured to display an image indicating the information that is desirably outputted. The output apparatus 25 may also output information as audio/sound. That is, the output apparatus 25 may include an audio apparatus (a so-called speaker) that is configured to output audio/sound. In other words, in the second example embodiment, the information processing apparatus 2 includes the display D and the speaker S described above, as output apparatus 25. Furthermore, for example, the output apparatus 25 may output information onto a paper surface. That is, the output apparatus 25 may include a print apparatus (a so-called printer) that is configured to print desired information on the paper surface.

### [2-3: Information Processing Operation Performed by Information Processing Apparatus 2]

The information processing apparatus 2 may transition each mechanism of the display D, the left camera L, the right camera R, the upper camera U, the reception unit IN, the reading unit Re, the speaker S, and the microphone Mic, from a standby state into an operational state, depending on a size of the target person appearing in the image captured by the monitoring camera M. Alternatively, when detecting that the image captured by the monitoring camera M includes the target person facing straight ahead, the information processing apparatus 2 may transition each of the above mechanisms into the operational state. Alternatively, the information processing apparatus 2 may further include a distance sensor, and when the distance sensor detects that the target person has approached the information processing apparatus 2 to a predetermined distance, the information processing apparatus 2 may transition each of the above mechanisms into the operational state. The information processing apparatus 2 may transition each of the above mechanisms into the operational state when it is determined that there is a target person wishing to use the information processing apparatus 2.

### [Acquisition of Face Image]

With reference to FIG. 4, a face image acquisition operation performed by the information processing apparatus 2 in the second example embodiment will be described. FIG. 4 is a flowchart illustrating a flow of the face image acquisition operation performed by the information processing apparatus 2 in the second example embodiment.

As illustrated in FIG. 4, the height determination unit 211 determines a height of the face of the target person (step S20). The height determination unit 211 may make a determination, based on information acquired from at least one of the left camera L, the right camera R, the upper camera U, the monitoring camera M, and the microphone Mic. The height determination unit 211 may determine the height of the face of the target person, by detecting a head. The height determination unit 211 may determine the height of the face of the target person, by detecting an upper limit of an outline/contours of the target person. The height determination unit 211 may determine the height of the face of the target person, by detecting a location of a sound picked up by the microphone Mic. The information processing apparatus 2 may have a mechanism that is configured to freely adjust an angle of the display D and an angle of the top plate UB equipped with the passport reader or the like, by using a determination result of the height.

When the height of the face of the target person is less than a predetermined height (the step S20: L), the image capture instruction unit 212 instructs the left camera L and the right camera R to capture images of the face of the target person (step S21). The case where the height of the face of the target person is less than the predetermined height, corresponds to a case where the target person is of short stature, a case where the target person is in a wheelchair, or the like.

When the height of the face of the target person is greater than the predetermined height (the S20: H), the image capture instruction unit 212 instructs the upper camera U to capture images of the face of the target person (step S22). The case where the height of the face of the target person is greater than the predetermined height, corresponds to a case where the target person is tall or the like, for example. That is, the image capture instruction unit 212 gives instructions to cause the camera corresponding to the height of the face of the target person to operate, thereby facilitating acquisition of the face image suitable for face verification.

### [Face Authentication Operation]

The face image of the target person acquired by capturing images with at least one of the left camera L, the right camera R, and the upper camera U, may be matched with the face image acquired by the reading unit Re. The face image of the target person acquired by capturing images with at least one of the left camera L, the right camera R, and the upper camera U, may be referred to as a captured face image. The face image acquired by the reading unit Re may be referred to as a read face image. The read face image may be a face image read from a passport photo of the target person.

The information processing apparatus 2 may request a management apparatus C to collate/verify the captured face image with the read face image. The information processing apparatus 2 may transmit the captured face image, the read face image, and the verification request, to the management apparatus C. The information processing apparatus 2 may have a feature quantity extraction function. **In** this case, the information processing apparatus 2 may transmit feature quantities extracted from the captured face image, feature quantities extracted from the read face image, and the verification request, to the management apparatus C.

Alternatively, the information processing apparatus 2 itself may include a face verification mechanism. In this case, the information processing apparatus 2 may transmit verification information indicating a result of the face verification for the target person using the information processing apparatus 2, to the management apparatus C.

The reading unit Re may read identification information capable of identifying the target person. For example, the reading unit Re may read the identification information from a passport. The management apparatus C may be configured to use a registration information database in which the identification information on the target person and the face image of the target person are registered. In this case, the information processing apparatus 2 may transmit the identification information read by the reading unit Re and the captured face image, to the management apparatus C, and may request the management apparatus C to perform the face authentication on the target person. The management apparatus C may perform the face authentication on the target person, by matching the registered face image registered in the registration information database with the captured face image. The face authentication may be performed on the management apparatus C, on the information processing apparatus 2, or on a not-illustrated cloud side.

The face authentication may be performed in a case where the captured face image suitable for the face authentication is successfully acquired and at least one of the captured face image and the identification information is successfully acquired.

The information processing apparatus 2 may receive authentication information indicating an authentication result of the requested face authentication from the management apparatus C. The authentication information may indicate a success in the matching of the captured face image with the read face image or the registered face image, and a success in identity verification of the target person using the information processing apparatus 2. Alternatively, the authentication information may indicate a failure in the matching of the captured face image with the read face image or the registered face image, and a failure in the identity verification of the target person using the information processing apparatus 2. For example, the display D may display the authentication information indicating the result of the face authentication for the target person. The case of the success in the matching of the captured face image with the read face image or the registered face image, may include a case where a matching score indicating a degree of similarity between face images exceeds a predetermined threshold and each face image indicates a high degree of similarity.

The information processing apparatus 2 may transmit, to the management apparatus C, information read by the reading unit Re, information received by the reception unit IN, and audio information collected by the microphone Mic, as information from the authenticated target person.

### [Customs Declaration Related Operation]

The target person may, for example, display a code for customs declaration on a carrying terminal apparatus and have the reading unit Re read the code. Declaration information may be acquired from the code for customs declaration read by the reading unit Re. The declaration information includes information to be declared in customs declaration when the target person enters a country. The declaration information may include information required for the customs declaration, such as, for example, the target person's name, current address or place of stay in the country of entry, occupation, date of birth, passport number, flight number, place of departure, date of entry, and matters to be declared in the customs declaration. When the reading unit Re reads the code for customs declaration, the information processing apparatus 2 may allow the display D to display a declaration content confirmation screen for the target person.

In addition, the information processing apparatus 2 may allow the display D to display determination information indicating a determination result of the declaration content. The display D may display the declaration content confirmation screen for the target person to confirm the declaration content and to make corrections if necessary. In addition, for example, in a case where there are any deficiencies in the declaration content and assistance by a human is required, the information processing apparatus 2 may allow the display D to display a guidance screen for guiding the target person to a manned booth, and may allow the target person guided to the manned booth.

Furthermore, for example, the information processing apparatus 2 may be compatible with multiple languages, such as, for example, Japanese, English, Chinese, and Korean, in the same manner as in a customs declaration application that is usable on the terminal apparatus. The information processing apparatus 2 may be configured to set a language of use, based on language information read from the code for declaration displayed on the terminal apparatus carried by the target person intending to submit a customs declaration. In this case, the information processing apparatus 2 may be configured to be input and output information in the language set from among the multiple languages.

### [Guiding Operation]

The information processing apparatus 2 may receive guidance information to be outputted to the target person from the management apparatus C. The information processing apparatus 2 may control at least one of the display D and the speaker S to output the guidance information to the target person. The guidance information may include information indicating a place where the target person should go. The place where the target person should go, may include a place for performing the following matters to be performed. The guidance information may include information such as a matter to be performed by the target person and a time limit for the matter to be performed. The guidance information may include a place where the target person is permitted to enter, and a place where the target person is prohibited from entering. The display D may display the guidance screen for the target person.

For example, the management apparatus C may have information in which the target person is associated with the place where the target person should go. For example, in a case where the target person is scheduled to board an aircraft at an airport and it is before a boarding procedure, the place where the target person should go may be a self-service check-in machine. In a case where the target person has not yet checked in his baggage, the place where the target person should go may be a baggage counter. In a case where the target person is before security screening, the place where the target person should go may be a security screening area. In a case where the target person is after the security screening, the place where the target person should go may be a boarding gate.

A form of the support B is not limited to the one illustrated in FIG. 2, and the support B may be in various forms, such as a pole, a support stand, and a counter, installed with its longitudinal direction vertical.

### [2-4: Technical Effect of Information Processing Apparatus 2]

Since the information processing apparatus 2 in the second example embodiment includes the display D and the speaker S, it is possible to properly provide information to the target person. In addition, since the information processing apparatus 2 includes the left camera L, the right camera R, the upper camera U, the monitoring camera M, the information reception unit IN, and the microphone Mic, it is possible to properly acquire information from the target person. Since the information processing apparatus 2 changes the camera to use for image capture depending on the height of the face of the target person, it is possible to properly capture images of the face of the target person. As a result, the information processing apparatus 2 is allowed to capture images of a quality suitable for the face authentication.

### [3: Third Example Embodiment]

Next, an information processing apparatus, an information processing system, an information processing method, and a recording medium according to a third example embodiment will be described. The following describes the information processing apparatus, the information processing system, the information processing method, and the recording medium according to the third example embodiment, by using an information processing apparatus 3 to which the information processing apparatus, the information processing system, the information processing method, and the recording medium according to the third example embodiment are applied.

### [3-1: Configuration of Information Processing Apparatus 3]

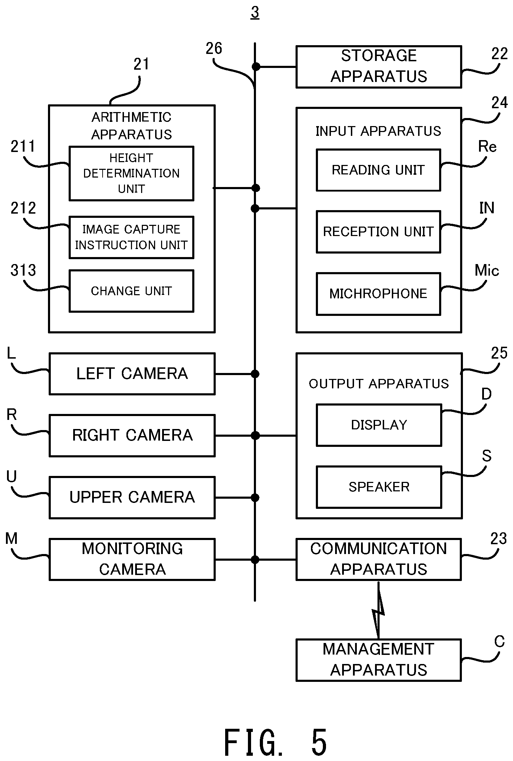

As illustrated in FIG. 5, the information processing apparatus 3 in the third example embodiment includes the arithmetic apparatus 21 and the storage apparatus 22, as in the information processing apparatus 2 in the second example embodiment. Furthermore, the information processing apparatus 3 in the third example embodiment may include the communication apparatus 23, the input apparatus 24, and the output apparatus 25, as in the information processing apparatus 2 in the second example embodiment. The information processing apparatus 3, however, may not include at least one of the communication apparatus 23, the input apparatus 24, and the output apparatus 25. The information processing apparatus 3 in the third example embodiment differs from the information processing apparatus 2 in the second example embodiment, in that the arithmetic apparatus 21 further includes a change unit 313. Other features of the information processing apparatus 3 may be the same as those of the information processing apparatus 2 in the second example embodiment. For this reason, a part differing from each of the example embodiments described above will be described in detail below, and a description of the other overlapping parts will be omitted as appropriate.

### [3-2: External Appearance of Information Processing Apparatus 3]

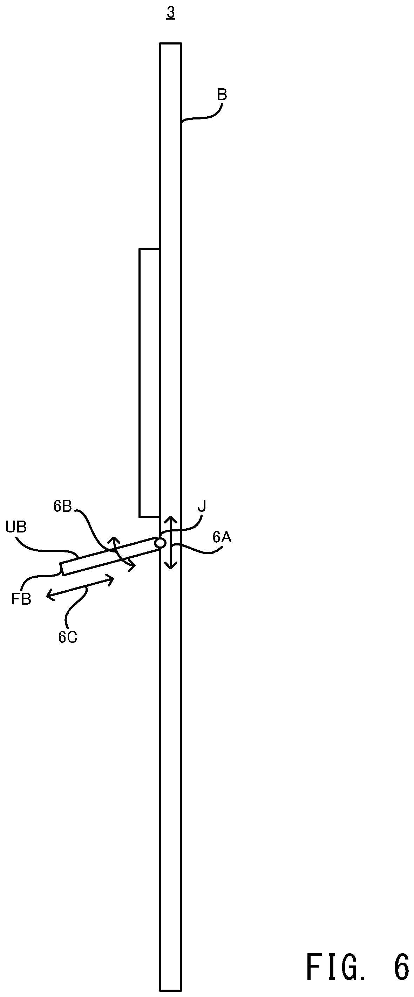

FIG. 6 is a side view of the information processing apparatus 3. The top plate UB may be inclined at a predetermined angle or more relative to a horizontal plane. The inclination of the top plate UB relative to the horizontal plane may be an angle of 15 degrees, for example. The inclination of the top plate UB relative to the horizontal plane may be in a range of 0 degrees to 25 degrees.

In a case where the top plate UB is inclined at a predetermined angle or more relative to the horizontal plane and an object is left on the top plate UB, the object naturally starts to move downward, so that the target person can be made aware that the object is left on the top plate UB. For example, in a case where a document such as a passport and a display screen of a smartphone, is read by the reading unit Re and the document is then left behind as the reception unit IN is operated, the document falling from the top plate may make the target person aware that there is an item left behind.

As illustrated by an arrow 6A in FIG. 6, a support part J in which the top plate UB is assembled with the support B, may be movable up and down relative to the support B. Furthermore, as illustrated by an arrow 6B in FIG. 6, the inclination of the top plate UB relative to the horizontal plane may be changeable around the position of the support part J. Furthermore, as illustrated by an arrow 6C in FIG. 6, a distance between the support part J and a surface FP of the top plate UB facing the target person may be changeable. The top plate UB may include an arm and a board, and its depth may be changed by moving the board along the arm.

### [3-3: Posture Change Operation of Information Processing Apparatus 3]

The change unit 313 changes at least one of the height, angle, and depth of the top plate UB depending on the height of the face of the target person. The height of the face of the target person may be determined by the height determination unit 211. The height determination unit 211 may make a determination, based on information acquired from at least one of the left camera L, the right camera R, the upper camera U, the monitoring camera M, and the microphone Mic. The change unit 313 may determine a height suitable for an operation at hand by the target person, based on the height of the face of the target person.

In a case where the height suitable for the operation at hand by the target person is relatively low, the change unit 313 may change a height of the support part J of the top plate UB to be relatively low. The change unit 313 may change a height of the top plate UB such that a position of the top plate UB is lower at least than the height of the face of the target person. In a case where the height suitable for the operation at hand by the target person is relatively low, the change unit 313 may increase the inclination of the top plate UB.

In a case where the height suitable for the operation at hand by the target person is relatively high, the change unit 313 may change the height of the support part J of the top plate UB to relatively high. In a case where the height suitable for the operation at hand by the target person is relatively high, the change unit 313 may reduce the inclination of the top plate UB. The change unit 313 may change the height, inclination, and depth of the top plate UB so as to make it easy for the target person to use. The change unit 313 may change the height, inclination, and depth of the top plate UB depending on a state of the target person, especially, at hand.

In particular, in a case where the target person is in a wheelchair, the change unit 313 may change the height of the support part J of the top plate UB to be higher than an armrest of the wheelchair. In this case, the change unit 313 may also change the depth such that the top plate UB horizontally protrudes outward.

In addition, in a case where there is an object on the top plate UB even though the target person has left from the information processing apparatus 3, the change unit 313 may increase the inclination of the top plate UB to notify the target person that there is an item left behind. For example, the top plate UB may include a mechanism for detecting weight, and when a predetermined weight or more is detected for a predetermined period or longer, the change unit 313 may determine that there is an item left on the top plate UB, and may increase the inclination of the top plate UB to notify the target person that there is an item left on the top plate UB.

### [3-4: Technical Effect of Information Processing Apparatus 3]

In the information processing apparatus 3 in the third example embodiment, the top plate UB is inclined at a predetermined angle or more relative to the horizontal plane, and it is therefore possible to make the target person aware that an object is left on the top plate UB. In addition, since the information processing apparatus 3 changes at least one of the angle, height, and depth of the top plate UB depending on the height of the face of the target person, the target person can use the information processing apparatus 3 in a comfortable posture.

### [4: Fourth Example Embodiment]

Next, an information processing apparatus, an information processing system, an information processing method, and a recording medium according to a fourth example embodiment will be described. The following describes the information processing apparatus, the information processing system, the information processing method, and the recording medium according to the fourth example embodiment, by using an information processing apparatus 4 to which the information processing apparatus, the information processing system, the information processing method, and the recording medium according to the fourth example embodiment are applied.

### [4-1: Configuration of Information Processing Apparatus 4]

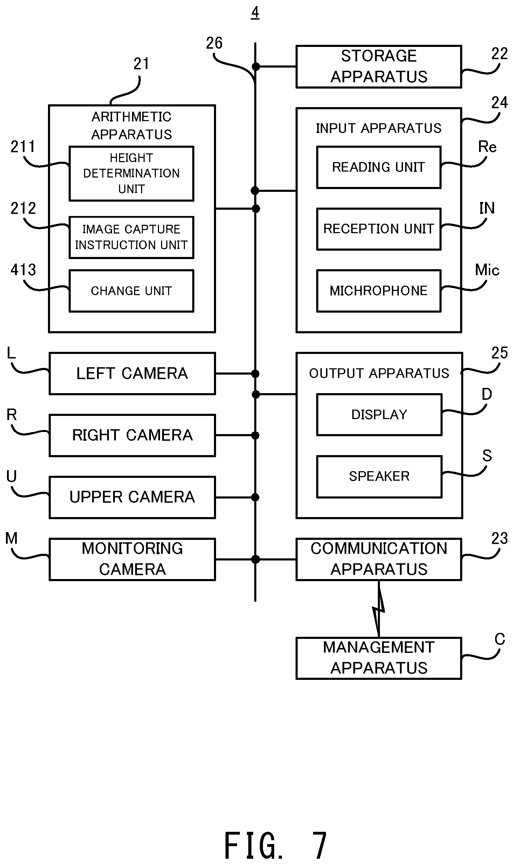

As illustrated in FIG. 7, the information processing apparatus 4 in the fourth example embodiment includes the arithmetic apparatus 21 and the storage apparatus 22, as in the information processing apparatus 2 in the second example embodiment and the information processing apparatus 3 in the third example embodiment. Furthermore, the information processing apparatus 4 in the fourth example embodiment may include the communication apparatus 23, the input apparatus 24, and the output apparatus 25, as in the information processing apparatus 2 in the second example embodiment and the information processing apparatus 3 in the third example embodiment. The information processing apparatus 4, however, may not include at least one of the communication apparatus 23, the input apparatus 24, and the output apparatus 25. The information processing apparatus 4 in the fourth example embodiment differs from the information processing apparatus 2 in the second example embodiment and the information processing apparatus 3 in the third example embodiment in that the arithmetic apparatus 21 further includes a change unit 413. Other features of the information processing apparatus 4 may be the same as those of the information processing apparatus 2 in the second example embodiment or the information processing apparatus 3 in the third example embodiment. For this reason, a part differing from each of the example embodiments described above will be described in detail below, and a description of the other overlapping parts will be omitted as appropriate.

### [4-2: Posture Change Operation of Information Processing Apparatus 4]

The change unit 413 changes at least one of an angle, height, and depth of at least one of the display D, the left camera L, the right camera R, the upper camera U, and the monitoring camera M, depending on the height of the face of the target person. The height of the face of the target person may be determined by the height determination unit 211. As in the third example embodiment, the height determination unit 211 may make a determination, based on information acquired from at least one of the left camera L, the right camera R, the upper camera U, the monitoring camera M, and the microphone Mic.

In a case where the height of the face of the target person is relatively low, the change unit 413 may change the height of at least one of the display D, the left camera L, the right camera R, the upper camera U, and the monitoring camera M to be relatively low. In a case where the height of the face of the target person is relatively low, the change unit 413 may change the inclination of the display D to be nearly vertical.

In a case where the height of the face of the target person is relatively high, the change unit 413 may change the height of at least one of the display D, the left camera L, the right camera R, the upper camera U, and the monitoring camera M to be relatively high. In a case where the height of the face of the target person is relatively high, the change unit 413 may incline the display D such that an upper side of the display D goes back.

In a case where the target person is in a wheelchair, the change unit 413 may change the depth of the display D such that the display D moves toward a front side. The change unit 413 may change the height, inclination, and depth of the display D so as to make it easy for the target person to visually recognize the display D.

The inclination of the display D may be in the range of 0 degrees to 30 degrees relative to the vertical plane, for example. The height of a center of the display D may be in a range of 1180 mm to 1250 mm, for example. The change unit 413 may change the height of the display D such that the target person can look down at the display D.

In the fourth example embodiment, the display D, the left camera L, the right camera R, and the upper camera U may be provided in the same housing. The housing in which the display D, the left camera L, the right camera R, and the upper camera U are provided, may be referred to as a display housing DH. That is, the display D, the left camera L, the right camera R, and the upper camera U may be integrally moved so as to integrally change the position and the angle thereof. In this case, image capture angles of the left camera L, the right camera R, and the upper camera U may be changed independently of each other.

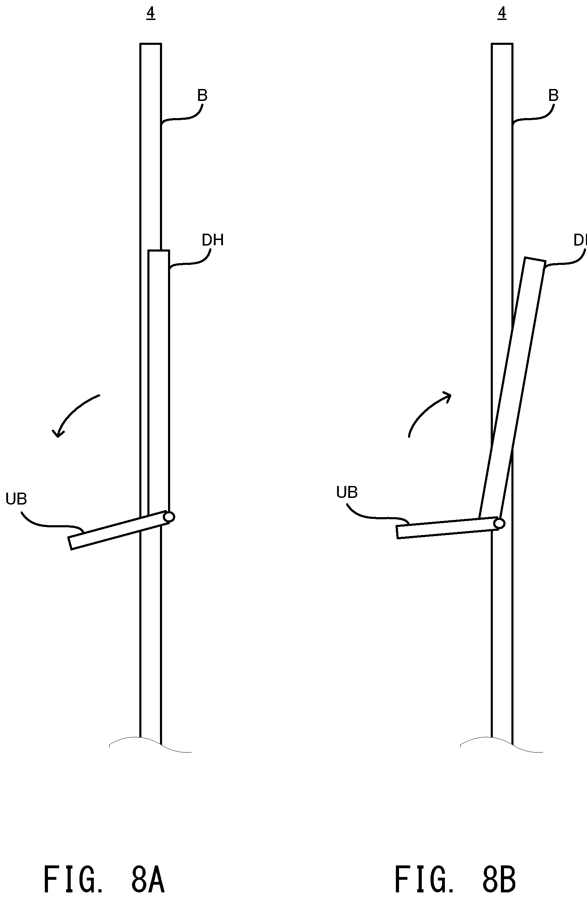

In addition, as illustrated in FIG. 8, in the fourth example embodiment, an angle formed by the display housing DH and the top plate UB may be fixed. For example, in a case where the height of the face of the target person is relatively low, the change unit 313 and the change unit 413 may change postures of the display housing DH and the top plate UB such that the display D is inclined nearly vertically, as illustrated in FIG. 8A. In addition, in a case where t the height of the face of the target person is relatively high, the change unit 313 and the change unit 413 may change the postures of the display housing DH and the top plate UB such that the top plate UB is inclined relatively horizontally, as illustrated in FIG. 8B.

### [4-3: Face Image Acquisition Operation of Information Processing Apparatus 4]

In the fourth example embodiment, as in the second example embodiment, the image capture instruction unit 212 may give instructions to cause the camera corresponding to the height of the face of the target person to operate. Alternatively, the image capture instruction unit 212 may cause all of the left camera L, the right camera R, and the upper camera U to capture images, and may select captured images to be adopted depending on the height and a face direction. Alternatively, the image capture instruction unit 212 may select the camera to be operated depending on an inclination of the face of the target person. For example, even if the target person is of short stature, if the person is looking upwards, the upper camera U may capture images. For example, in a case where the target person is of short stature and looking to the left, the number of images captured by the left camera L may be increased.

In addition, captured images obtained from at least one of the left camera L, the right camera R, and the upper camera U may be corrected so as to be equivalent to images captured from the front. In a case where captured images are obtained from a plurality of cameras out of the left camera L, the right camera R, and the upper camera U, the respective captured images may be combined to generate a single face image, to be used for subsequent processing. For example, the images captured by the left camera L and the right camera R, and the images captured by the upper camera U may be weighted depending on the height of the face of the target person, and may be used for subsequent processing.

### [4-4: Technical Effect of Information Processing Apparatus 4]

Since the information processing apparatus 4 in the fourth example embodiment changes at least one of the height and angle of at least one of the left camera L, the right camera R, the upper camera U, and the monitoring camera M, it is possible to acquire appropriate captured images. Since at least one of the height and angle of the display D is changed, it is easy for the target person to visually recognize the display D. It is also easy to acquire appropriate captured images.

### [5: Fifth Example Embodiment]

Next, an information processing apparatus, an information processing system, an information processing method, and a recording medium according to a fifth example embodiment will be described. The following describes the information processing apparatus, the information processing system, the information processing method, and the recording medium according to the fifth example embodiment, by using an information processing apparatus 5 to which the information processing apparatus, the information processing system, the information processing method, and the recording medium according to the fifth example embodiment are applied.

### [5-1: Configuration of Information Processing Apparatus 5]

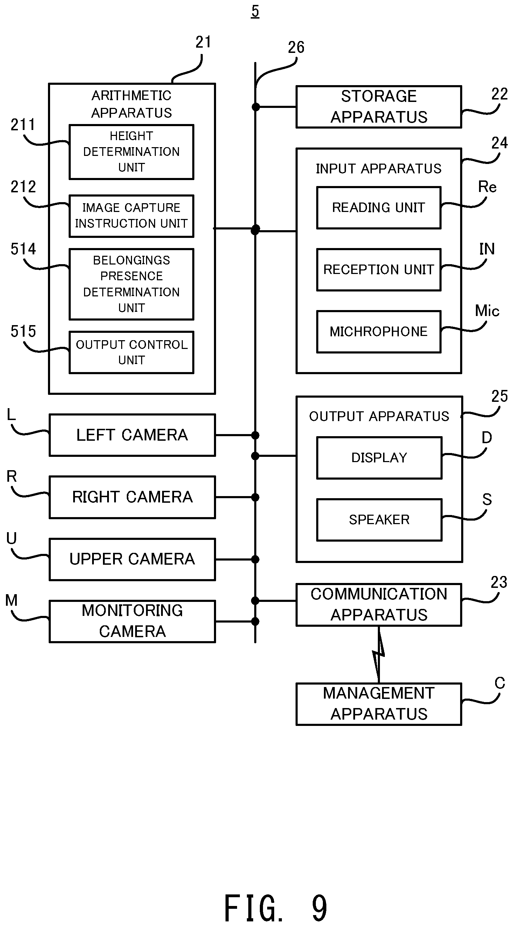

As illustrated in FIG. 9, the information processing apparatus 5 in the fifth example embodiment includes the arithmetic apparatus 21 and the storage apparatus 22, as in the information processing apparatus 2 in the second example embodiment to the information processing apparatus 4 in the fourth example embodiment. Furthermore, the information processing apparatus 5 in the fifth example embodiment may include the communication apparatus 23, the input apparatus 24, and the output apparatus 25, as in the information processing apparatus 2 in the second example embodiment to the information processing apparatus 4 in the fourth example embodiment. The information processing apparatus 5, however, may not include at least one of the communication apparatus 23, the input apparatus 24, and the output apparatus 25. The information processing apparatus 5 in the fifth example embodiment differs from the information processing apparatus 2 in the second example embodiment to the information processing apparatus 4 in the fourth example embodiment, in that the arithmetic apparatus 21 further includes a belongings presence determination unit 514 and an output control unit 515. Other features of the information processing apparatus 5 may be the same as those of at least one of the information processing apparatus 2 in the second example embodiment to the information processing apparatus 4 in the fourth example embodiment. For this reason, a part differing from each of the example embodiments described above will be described in detail below, and a description of the other overlapping parts will be omitted as appropriate.

### [5-2: Information Processing Operation Performed by Information Processing Apparatus 5]

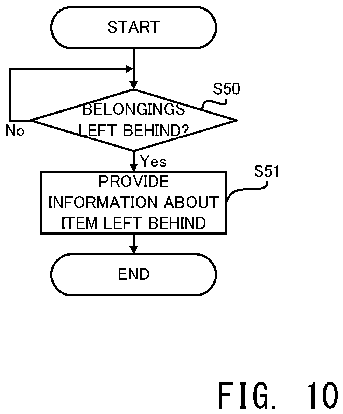

Next, with reference to FIG. 10, an information processing operation performed by the information processing apparatus 5 in the fifth example embodiment will be described. FIG. 10 is a flowchart illustrating a flow of the information processing operation performed by the information processing apparatus 5 in the fifth example embodiment.

The belongings presence determination unit 514 monitors belongings of the target person in a predetermined range including the information processing apparatus 5. The belongings presence determination unit 514 may monitor the belongings of the target person, based on information acquired from at least one of the left camera L, the right camera R, the upper camera U, the monitoring camera M, and the reading unit Re. For example, at least one of the left camera L, the right camera R, the upper camera U, and the monitoring camera M is configured to capture images of an object on the top plate UB. The belongings presence determination unit 514 is configure to detect the presence of the object on the top plate UB, based on information acquired from at least one of the left camera L, the right camera R, the upper camera U, and the monitoring camera M. In addition, the monitoring camera M is configured to capture images of an object on a floor around the information processing apparatus 5. The belongings presence determination unit 514 is configured to detect the presence of the object on the floor around the information processing apparatus 5, based on information acquired from the monitoring camera M.

As illustrated in FIG. 10, the belongings presence determination unit 514 determines whether or not belongings of the target person are in the predetermined range including the information processing apparatus 5 for more than a predetermined time (step S50). The belongings presence determination unit 514 may determine whether or not the belongings of the target person are in the predetermined range including the information processing apparatus 5 for more than the predetermined time, after the target person is no longer around the information processing apparatus 5. When it is determined that the belongings of the target person are in the predetermined range including the information processing apparatus 5 for more than the predetermined time (the step S50: Yes), the output control unit 515 outputs information indicating the target person and information indicating the belongings of the target person (step S51). For example, the output control unit 515 may identify an individual from information in the passport read by the reading unit Re. In this case, the output control unit 515 may associate the information identifying the identified individual with a captured image of the relevant belongings and may transmit them to the management apparatus C. The output control unit 515 may also transmit information indicating that the belongings captured in the image are left behind, together with the captured image of the relevant belongings, to the contacts of the identified individual.

### [5-3: Technical Effect of Information Processing Apparatus 5]

The information processing apparatus 5 in the fifth example embodiment may use the information acquired from at least one of the left camera L, the right camera R, the upper camera U, the monitoring camera M, and the reading unit Re to determine whether or not there is an item left behind near the information processing apparatus 5, to identify an owner of the item left behind, and to provide information about the item left behind.

### [6: Sixth Example Embodiment]

Next, an information processing apparatus, an information processing system, an information processing method, and a recording medium according to a sixth example embodiment will be described. The following describes the information processing apparatus, the information processing system, the information processing method, and the recording medium according to the sixth example embodiment, by using an information processing apparatus 6 to which the information processing apparatus, the information processing system, the information processing method, and the recording medium according to the sixth example embodiment are applied.

### [6-1: External Appearance of Information Processing Apparatus 6]

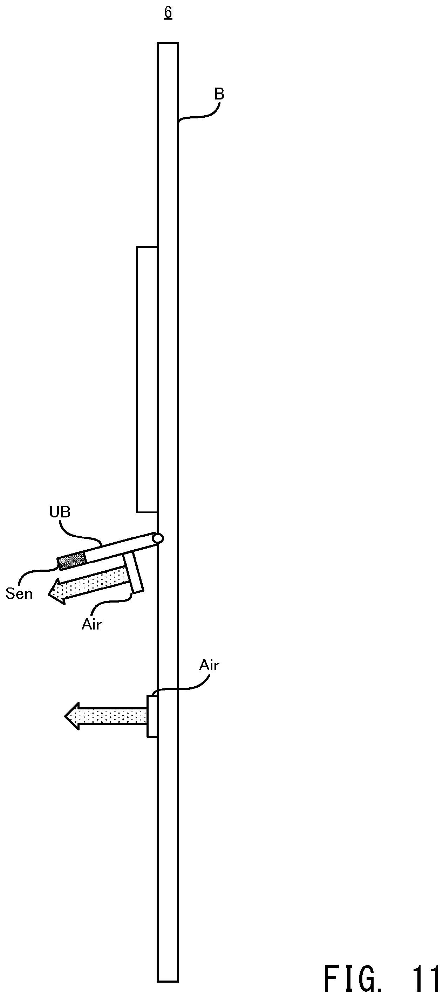

As illustrated in FIG. 11, the information processing apparatus 6 in the sixth example embodiment further includes an odor sensor Sen and a gas output unit Air. The odor sensor Sen detects a predetermined odor/smell. The predetermined odor may be an odor of a predetermined object. The predetermined object may be an object whose import or export is prohibited or restricted. The odor sensor Sen detects an odor of at least one of the target person and the belongings of the target person. The odor sensor Sen may be provided on a frontmost surface FP of the top plate UB. The odor sensor Sen may be provided in a place relatively close to the target person.

The gas output unit Air outputs gas. The gas output unit Air may output air. The gas output unit Air may be provided in a plurality of parts of the information processing apparatus 6.

### [6-2: Configuration of Information Processing Apparatus 6]

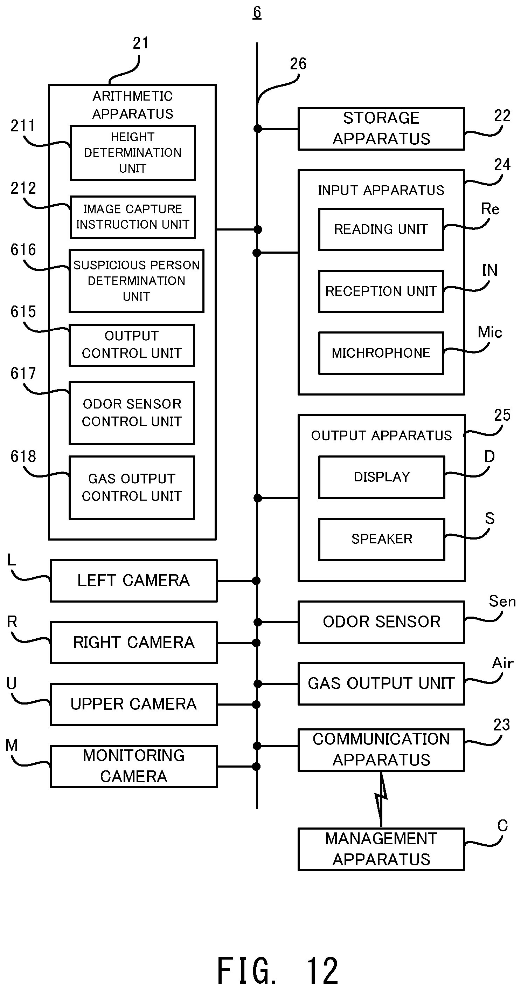

As illustrated in FIG. 12, the information processing apparatus 6 in the sixth example embodiment includes the arithmetic apparatus 21 and the storage apparatus 22, as in the information processing apparatus 2 in the second example embodiment to the information processing apparatus 5 in the fifth example embodiment. Furthermore, the information processing apparatus 6 in the sixth example embodiment may include the communication apparatus 23, the input apparatus 24, and the output apparatus 25, as in the information processing apparatus 2 in the second example embodiment to the information processing apparatus 5 in the fifth example embodiment. The information processing apparatus 6, however, may not include at least one of the communication apparatus 23, the input apparatus 24, and the output apparatus 25. The information processing apparatus 6 in the sixth example embodiment differs from the information processing apparatus 2 in the second example embodiment to the information processing apparatus 5 in the fifth example embodiment, in that the arithmetic apparatus 21 further includes an output control unit 615, a suspicious person determination unit 616, an odor sensor control unit 617, and a gas output control unit 618. Other features of the information processing apparatus 6 may be the same as those of at least one of the information processing apparatus 2 in the second example embodiment to the information processing apparatus 5 in the fifth example embodiment. For this reason, a part differing from each of the example embodiments described above will be described in detail below, and a description of the other overlapping parts will be omitted as appropriate.

### [6-3: Information Processing Operation Performed by Information Processing Apparatus 6]

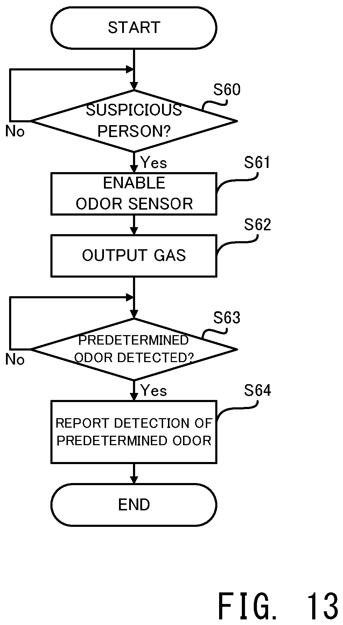

Next, with reference to FIG. 13, an information processing operation performed by the information processing apparatus 6 in the sixth example embodiment will be described. FIG. 13 is a flowchart illustrating a flow of the information processing operation performed by the information processing apparatus 6 in the sixth example embodiment.

As illustrated in FIG. 13, the suspicious person determination unit 616 determines whether or not the target person is a suspicious person (step S60). The suspicious person determination unit 616 may monitor behavior of the target person, based on information acquired from at least one of the left camera L, the right camera R, the upper camera U, the monitoring camera M, the reading unit Re, the reception unit IN, and the microphone Mic. The suspicious person determination unit 616 may determine that the target person is a suspicious person when a movement of a predetermined part of the target person exhibits predetermined behavior. The predetermined part of the target person may include the target person's head, eyes and eye area, mouth and mouth area, arms, palms, and the like. The suspicious person determination unit 616 may determine that the target person is a suspicious person when it detects suspicious behavior.

When the suspicious person determination unit 616 determines that the person is a suspicious person (the step S60: Yes), the odor sensor control unit 617 enables operation of the odor sensor Sen (step S61). The odor sensor control unit 617 may start the operation of the odor sensor Sen when the suspicious person determination unit 616 determines that the person is a suspicious person. Alternatively, the odor sensor control unit 617 may lower a sensitivity threshold of the odor sensor Sen to facilitate detection of the predetermined odor, when the suspicious person determination unit 616 determines that the target person is a suspicious person.

When the operation of the odor sensor Sen is enabled, the gas output control unit 618 causes the gas output unit Air to output gas (step S62). When the suspicious person determination unit 616 determines that the target person is a suspicious person, the gas output control unit 618 may cause the gas output unit Air to blow gas against at least one of the target person and the belongings of the target person, so that the gas may be vaporized easily due to the blowing. The odor sensor Sen may detect the predetermined object by analyzing the gas blown and collected by the gas output unit Air.

After the step S61, the output control unit 615 continues determining whether or not the odor sensor Sen detects the predetermined odor (step S63). When the odor sensor Sen detects the predetermined odor (the step S63: Yes), the output control unit 615 outputs information indicating to that effect (step S64). The output control unit 615 may associate an object type with information about the target person, and may output them to the management apparatus C, for example. The information about the target person may be the face image of the target person and the identification information such as the target person's name.

In addition, when it is determined in the step S60 that the target person is a suspicious person, when the predetermined time elapses after starting to detect the predetermined odor, and when the predetermined odor is not detected, the odor sensor control unit 617 may disable the operation of the odor sensor Sen.

In addition, at least one of the operations in the steps S60, S61, and S62 may not be performed. For example, even if the target person is not determined to be a suspicious person, the operation of the odor sensor Sen may be enabled. The operation of the odor sensor Sen may always be enabled in the first place. In addition, even if the target person is not determined to be a suspicious person, the gas output unit Air may output gas. Alternatively, the information processing apparatus 6 may not include the gas output unit Air.

In the flow illustrated in FIG. 13, the operations in the steps S61 and S62 are performed when the suspicious person determination unit 616 determines that the target person is a suspicious person, but in a case where a suspicion degree is low, only the operation in the step S61 is performed and the operation in the step S62 may not be performed. For example, when the suspicion degree exceeds a first threshold, but does not exceed a second threshold, only the operation in the step S61 is performed, and when the suspicion degree exceeds the second threshold, both the operations in the steps S61 and step S62 may be performed.

### [6-4: Technical Effect of Information Processing Apparatus 6]

The information processing apparatus 6 in the sixth example embodiment is configured to detect a predetermined target person by the odor while the target person is going through various procedures. The information processing apparatus 6 is configured to detect the odor when there is a target person determined to be a suspicious person. That is, unnecessary detection processing is not performed when the target person is a person for whom the odor detection is unnecessary. In the information processing apparatus 6, blowing gas facilitates the odor detection.

### [7: Seventh Example Embodiment]

Next, an information processing apparatus, an information processing system, an information processing method, and a recording medium according to a seventh example embodiment will be described. The following describes the information processing apparatus, the information processing system, the information processing method, and the recording medium according to the seventh example embodiment, by using an information processing apparatus 7 to which the information processing apparatus, the information processing system, the information processing method, and the recording medium according to the seventh example embodiment are applied.

### [7-1: Configuration of Information Processing Apparatus 7]

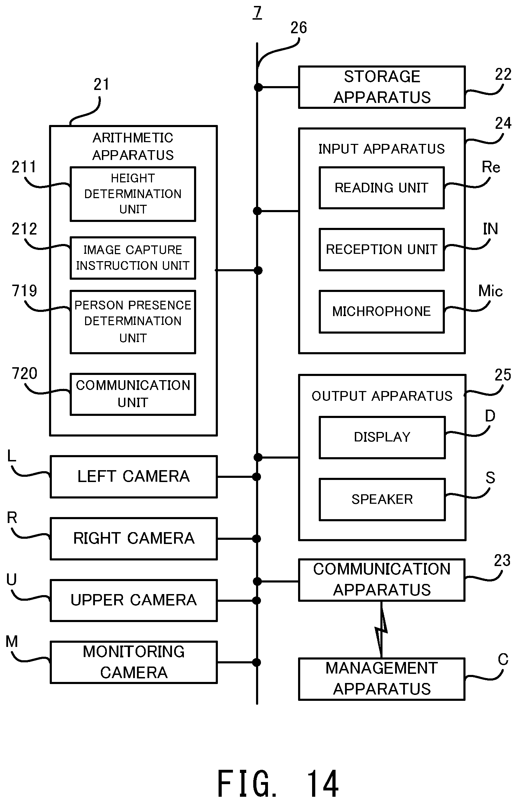

As illustrated in FIG. 14, the information processing apparatus 7 in the seventh example embodiment includes the arithmetic apparatus 21 and the storage apparatus 22, as in the information processing apparatus 2 in the second example embodiment to the information processing apparatus 6 in the sixth example embodiment. Furthermore, the information processing apparatus 7 in the seventh example embodiment may include the communication apparatus 23, the input apparatus 24, and the output apparatus 25, as in the information processing apparatus 2 in the second example embodiment to the information processing apparatus 6 in the sixth example embodiment. The information processing apparatus 7, however, may not include at least one of the communication apparatus 23, the input apparatus 24, and the output apparatus 25. The information processing apparatus 7 in the seventh example embodiment differs from the information processing apparatus 2 in the second example embodiment to the information processing apparatus 6 in the sixth example embodiment, in that the arithmetic apparatus 21 further includes a person presence determination unit 719 and a communication unit 720. Other features of the information processing apparatus 7 may be the same as those of at least one of the information processing apparatus 2 in the second example embodiment to the information processing apparatus 6 in the sixth example embodiment. For this reason, a part differing from each of the example embodiments described above will be described in detail below, and a description of the other overlapping parts will be omitted as appropriate.

### [7-2: Information Processing Operation Performed by Information Processing Apparatus 7]

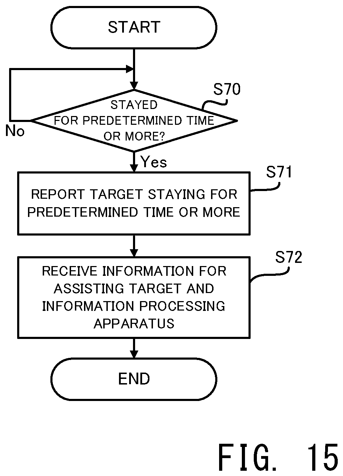

Next, with reference to FIG. 15, an information processing operation performed by the information processing apparatus 7 in the seventh example embodiment will be described. FIG. 15 is a flowchart illustrating a flow of the information processing operation performed by the information processing apparatus 7 in the seventh example embodiment.

The person presence determination unit 719 monitors the presence of the target person in a predetermined range including the information processing apparatus 7. The person presence determination unit 719 may monitor the presence of the target person, based on information acquired from at least one of the left camera L, the right camera R, the upper camera U, the monitoring camera M, the reading unit Re, the reception unit IN, and the microphone Mic.

As illustrated in FIG. 15, when it is determined that the target person is in the predetermined range including the information processing apparatus 7 for more than a predetermined time (step S70: Yes), the communication apparatus 720 transmits information indicating to that effect, to the management apparatus C (step S71). A case where the target person is in the predetermined range including the information processing apparatus 7 for more than the predetermined time, may correspond to a case where the operation is not progressed for the predetermined time or more, after the target person stands in front of the information processing apparatus 7. In addition, in a case where the predetermined time elapses after the target person operates the reception unit IN, the determination in the step S70 may be affirmed. In addition, in a case where the target person does not operate the reception unit IN even though the face image of the target person is acquired, the determination in the step S70 may be affirmed. In addition, in a case where the target person does not have the passport read by the reading unit Re, the determination in the step S70 may be affirmed.

The communication apparatus 720 receives information from the management apparatus C and assists in the operation of at least one of the target person and the information processing apparatus 7 in response to the received information (step S72). The communication apparatus 720 may control at least one of the display D and the speaker S to output information for assisting the target person. For example, the communication apparatus 720 may highlight a part of the display D corresponding to a part of the reception apparatus IN to be operated by the target person. At least one of the display D, the left camera L, the right camera R, the upper camera U, the reading unit Re, and the speaker S may operate in response to an operation of an administrator of the management apparatus C. For example, the left camera L, the right camera R, and the upper camera U may be caused to capture the face image of the target person in response to the operation of the administrator of the management apparatus C. In addition, the administrator may input matters to be received via the reception unit IN, or the like, on behalf of the target person. For example, the administrator may input the target person's name on behalf of the target person. The administrator may also select a language of use the target person on behalf of the target person.

### [7-3: Technical Effect of Information Processing Apparatus 7]

Since the information processing apparatus 7 in the seventh example embodiment assists in the operation of the target person, it is possible to prevent/control the target person wishing to use the information processing apparatus 7 from staying for a long time.

### [8: Eighth Example Embodiment]

Next, an information processing apparatus, an information processing system, an information processing method, and a recording medium according to an eighth example embodiment will be described. The following describes the information processing apparatus, the information processing system, the information processing method, and the recording medium according to the eighth example embodiment, by using an information processing apparatus 8 to which the information processing apparatus, the information processing system, the information processing method, and the recording medium according to the eighth example embodiment are applied.

Although it is omitted from the illustration, the information processing apparatus 8 includes a transfer unit T that is effective in a desired case. The transfer unit T may be a means suitable for transfer/movement on a plane. The transfer unit T may be one or more wheels. The transfer unit T may be a belt conveyor.

### [8-1: Configuration of Information Processing Apparatus 8]

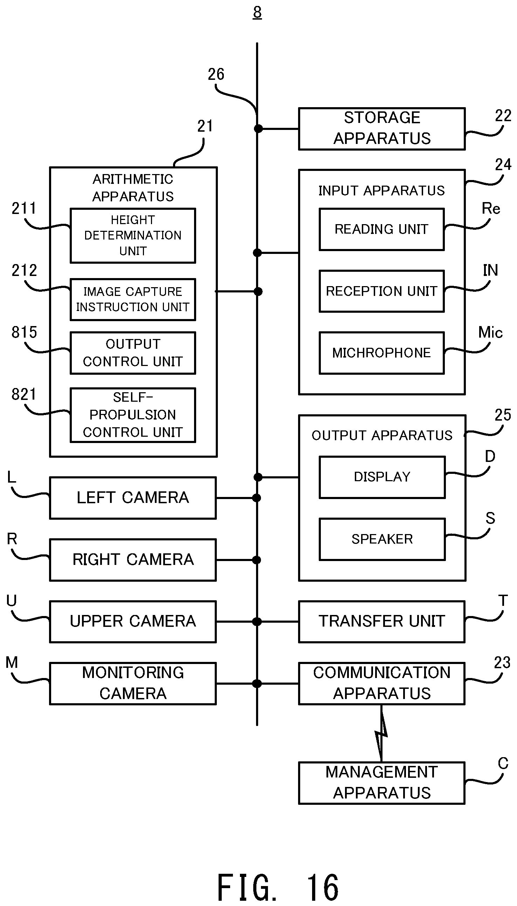

As illustrated in FIG. 16, the information processing apparatus 8 in the eighth example embodiment includes the arithmetic apparatus 21 and the storage apparatus 22, as in the information processing apparatus 2 in the second example embodiment to the information processing apparatus 7 in the seventh example embodiment. Furthermore, the information processing apparatus 8 in the eighth example embodiment may include the communication apparatus 23, the input apparatus 24, and the output apparatus 25, as in the information processing apparatus 2 in the second example embodiment to the information processing apparatus 7 in the seventh example embodiment. The information processing apparatus 8, however, may not include at least one of the communication apparatus 23, the input apparatus 24, and the output apparatus 25. The information processing apparatus 8 in the eighth example embodiment differs from the information processing apparatus 2 in the second example embodiment to the information processing apparatus 7 in the seventh example embodiment, in that the arithmetic apparatus 21 further includes a self-propulsion control apparatus 821. Other features of the information processing apparatus 8 may be the same as those of at least one of the information processing apparatus 2 in the second example embodiment to the information processing apparatus 7 in the seventh example embodiment. For this reason, the following will explain in detail the parts that differ from the respective example embodiments already described, and will omit the explanation of other overlapping parts as appropriate.

### [8-2: Information Processing Operation Performed by Information Processing Apparatus 8]

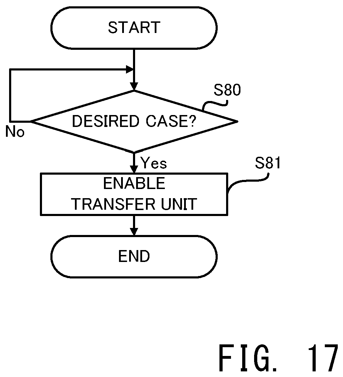

Next, with reference to FIG. 17, an information processing operation performed by the information processing apparatus 8 in the eighth example embodiment will be described. FIG. 17 is a flowchart illustrating a flow of the information processing operation performed by information processing apparatus 8 in the eighth example embodiment.

As illustrated in FIG. 17, the self-propulsion control apparatus 821 monitors whether or not it is a desired case (step S80). The desired case may be a case of requiring the guiding operation in a new place to move to, the guiding operation due to transfer/movement, or the like. The desired case may be a case where the safety of the target person should be ensured in a place where the information processing apparatus 8 is installed, such as in the event of disaster, for example. In the desired case, information may be transmitted from the management apparatus C. The management apparatus C may detect a location of disaster, congestion/crowds of people, or the like in the event of disaster, and may transmit the information to the information processing apparatus 8.

In the desired case (the step S80, Yes), the transfer unit T is enabled (step S81). When information indicating that it is in the desired case is received from the management apparatus C, the control of operation of the transfer unit T by the self-propulsion control unit 821 may be enabled.

The self-propulsion control unit 821 causes the information processing apparatus 8 to be self-propelled by the transfer unit T in the desired case. The self-propulsion control unit 821 may receive operation instructions from the management apparatus C. That is, the information processing apparatus 8 may be remotely operated by the management apparatus C via the self-propulsion control unit 821.

The information processing apparatus 8 may be transferred/moved by the transfer unit T to a location of the target person requiring guidance. The target person may be guided by an output from at least one of the display D and the speaker S. Guidance on an optimal evacuation route may be outputted.

The information processing apparatus 8 may report crowded places. It may also report dangerous places to enter, or places to keep away. It may guide the target person. It may be transferred/moved to dangerous places for the target person to enter, and may report that entry is prohibited.

The output control apparatus 815 may cause the display D to output the optimal evacuation route. The information processing apparatus 8 may use the transfer unit T to move closer to the target person near the information processing apparatus 8 and may notify the target person of the optimal evacuation route.

### [8-3: Technical Effect of Information Processing Apparatus 8]

The information processing apparatus 8 in the eighth example embodiment is allowed to report necessary information in an appropriate place.

### [9: Ninth Example Embodiment]

Next, an information processing apparatus, an information processing system, an information processing method, and a recording medium according to a ninth example embodiment will be described. The following describes the information processing apparatus, the information processing system, the information processing method, and the recording medium according to the ninth example embodiment, by using an information processing system SYS to which the information processing apparatus, the information processing system, the information processing method, and the recording medium according to the ninth example embodiment are applied.

### [9-1: Configuration of Information Processing System SYS]

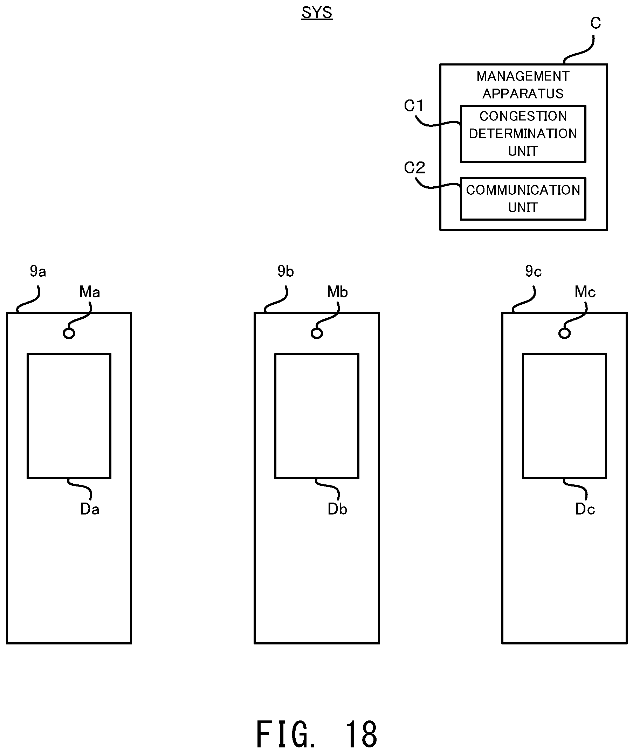

As illustrated in FIG. 18, the information processing system SYS includes a plurality of information processing apparatuses 9 and the management apparatus C. The information processing apparatus 9 may be the same as any one of the information processing apparatuses 1 to 8. The management apparatus C may include a congestion determination unit C1 and a communication unit C2. FIG. 18 includes information processing apparatuses 9a, 9b, and 9c, each of which includes a display D and a monitoring camera M.

### [9-2: Information Processing Operation Performed by Information Processing System SYS]

The congestion determination unit C1 may calculate congestion information. The congestion information is information indicating a degree of congestion near each of the information processing apparatuses 9. The congestion determination unit C1 may calculate the congestion information from the detected number of the target persons included in images captured by the monitoring camera M. The congestion determination unit C1 may calculate the congestion information from the detected number of the faces of the target persons included in the images captured by the monitoring camera M. In a case where the number of the target persons included in the images captured by the monitoring camera M is greater than a predetermined value, the congestion determination unit C1 may determine that it is preferable to guide the target persons intending to use the information processing apparatus (e.g., the information processing apparatus 9a) to another information processing apparatus 9. In addition, in a case where the number of the target persons included in the images captured by the monitoring camera M is less than the predetermined value, the congestion determination unit C1 may determine that it is preferable to guide the target persons intending to use the information processing apparatus 9, to the information processing apparatus including he the monitoring camera M (e.g., information processing apparatus 9c). The communication apparatus C2 may output, to each of the information processing apparatuses 9, information indicating the information processing apparatuses 9 in which the number of the target persons included in the images captured by the monitoring camera M is greater than the predetermined value, and information indicating the information processing apparatuses 9 in which the number of the target persons captured by the monitoring camera M is less than the predetermined value.

For example, the congestion determination unit C1 may determine that the number of the target persons included in images captured by a monitoring camera Ma is greater than the predetermined value, and that it is preferable to guide the target persons intending to use the information processing apparatus 9a to another information processing apparatus 9. The congestion determination unit C1 may also determine that the number of the target persons included in images captured by a monitoring camera Mc is less than the predetermined value, and that it is preferable to guide the target persons intending to use the information processing apparatus 9a to the information processing apparatus 9c. In this case, the communication apparatus C2 may output, at least to the information processing apparatus 9a and the information processing apparatus 9c, information indicating the information processing apparatus 9a in which the number of the target persons included in the images captured is greater than the predetermined value, and information indicating the information processing apparatus 9c in which the number of the target persons captured by the monitoring camera M is less than the predetermined value. The information processing apparatus 9a may cause a display Da information for guiding the target persons to the information processing apparatus 9c that is not crowded. The information processing apparatus 9c may cause a display Dc to display information indicating that the information processing apparatus 9c is not crowded.

### [9-3: Technical Effect of Information Processing System SYS]

For example, after an aircraft lands, a large number of target persons use the information processing apparatuses 9. In such a case, in the information processing system SYS in the ninth example embodiment, the degree of congestion in front of the information processing apparatuses 9 is calculated, and the degree of congestion is shared among the plurality of information processing apparatuses 9. For the information processing apparatuses 9 for which many target persons are in line, the locations of the information processing apparatuses 9 for which less target persons are in line, are outputted to the target persons and the administrator. It is therefore possible to reduce a waiting time for the target persons.

### [10: Supplementary Notes]

With respect to the example embodiment described above, the following Supplementary Notes are further disclosed.

### [Supplementary Note 1]

An information processing apparatus including:
a display;
a left camera that is provided on a left side of the display and that captures images of a target from the left side;
a right camera that is provided on a right side of the display and that captures images of the target from the right side;
an upper camera that is provided on an upper side the display and that captures images of the target from the upper side; and
a monitoring camera that is provided on the upper side the display and that monitors the target from the upper side.

### [Supplementary Note 2]

The information processing apparatus according to Supplementary Note 1, further including:
a left plate member that is provided on a left side of the left camera, and that prevents display contents of the display from being viewed by a person other than the target and prevents a person other than the target from being captured in the images captured by the right camera and the images captured by the upper camera;
a right plate member that is provided on a right side of the right camera, and that prevents the display contents of the display from being viewed by a person other than the target and prevents a person other than the target from being captured in the images captured by the left camera and the images captured by the upper camera;
a top plate that is provided below the display, that protrudes toward the target facing the display, and that has a reader on a top surface;
a reception unit that detects an instruction operation of the target in a space between the display and the target, and that receives an input of instructions to the information processing apparatus;
a speaker that outputs audio/sound toward the target; and
a microphone that inputs voice/sound emitted by the target.

### [Supplementary Note 3]

The information processing apparatus according to Supplementary Note 1 or 2, further including an image capture instruction unit:
that determines a height of a face of the target;
that instructs the left camera and the right camera to capture images of the face of the target, in response to the height of the face of the target being lower than a predetermined height; and
that instructs the upper camera to capture images of the face of the target, in response to the height of the face of the target being higher than the predetermined height.

### [Supplementary Note 4]

The information processing apparatus according to Supplementary Note 2, wherein the top plate is inclined at a predetermined angle or more relative to a horizontal plane.

### [Supplementary Note 5]

The information processing apparatus according to Supplementary Note 2 or 4, further including a change unit that determines a height of a face of the target and that changes at least one of a height, an angle, and a depth of the top plate.

### [Supplementary Note 6]

The information processing apparatus according to Supplementary Note 1 or 2, further including a change unit that determines a height of a face of the target and that changes at least one of a height, an angle, and a depth of at least one of the display, the left camera, the right camera, the upper camera, and the monitoring camera.

### [Supplementary Note 7]

The information processing apparatus according to Supplementary Note 2, further including a belongings information output unit that outputs information indicating the target and information indicating belongings of the target, in response to a determination that the belongings of the target are in a predetermined range including the information processing apparatus for more than a predetermined time.

### [Supplementary Note 8]

The information processing apparatus according to Supplementary Note 1 or 2, further including:
an odor sensor that detects a predetermined odor; and
an odor information output unit that outputs information indicating detection of the predetermined odor, in response to the odor sensor detecting the predetermined odor.

### [Supplementary Note 9]

The information processing apparatus according to Supplementary Note 8, further including:
a determination unit that determines whether or not the target is a suspicious person; and
an odor sensor control unit that enables an operation of the odor sensor, in response to a determination by the determination unit that the target is a suspicious person.

### [Supplementary Note 10]

The information processing apparatus according to Supplementary Note 8, further including:
a determination unit that determines whether or not the target is a suspicious person; and
a gas output unit that outputs gas, in response to a determination by the determination unit that the target is a suspicious person.

### [Supplementary Note 11]

The information processing apparatus according to Supplementary Note 1 or 2, further including an assist unit that assists in an operation of at least one of the target and the information processing apparatus, in response to a determination that the target is in a predetermined range including the information processing apparatus for more than a predetermined time.

### [Supplementary Note 12]

The information processing apparatus according to Supplementary Note 1 or 2, further including
a transfer unit that is enabled in a desired case,
the information processing apparatus being self-propelled by the transfer unit in the desired case.

### [Supplementary Note 13]

An information processing system including:
a plurality of information processing apparatuses, each including:
   a display;
   a left camera that is provided on a left side of the display and that captures images of a target from the left side;
   a right camera that is provided on a right side of the display and that captures images of the target from the right side;
   an upper camera that is provided on an upper side the display and that captures images of the target from the upper side; and
   a monitoring camera that is provided on the upper side the display and that monitors the target from the upper side, wherein
the display provided in the information processing apparatus in which a number of targets included in images captured by the monitoring camera is greater than a predetermined value, outputs information indicating the information processing apparatus in which the number of targets included in the images captured by the monitoring camera is less than the predetermined value.

### [Supplementary Note 14]

An information processing method including:
determining a height of a face of a target;
instructing a left camera and a right camera to capture images of the face of the target, in response to the height of the face of the target being lower than a predetermined height, the left camera being provided on a left side of a display and capturing images of the target from the left side, the right camera being provided on a right side of the display and capturing images of the target from the right side; and
instructing an upper camera to capture images of the face of the target, in response to the height of the face of the target being higher than the predetermined height, the upper camera being provided on an upper side the display and capturing images of the target from the upper side.

### [Supplementary Note 15]

A recording medium on which a computer program that allows a computer to execute an information processing method is recorded, the information processing method including:
determining a height of a face of a target;
instructing a left camera and a right camera to capture images of the face of the target, in response to the height of the face of the target being lower than a predetermined height, the left camera being provided on a left side of a display and capturing images of the target from the left side, the right camera being provided on a right side of the display and capturing images of the target from the right side; and
instructing an upper camera to capture images of the face of the target, in response to the height of the face of the target being higher than the predetermined height, the upper camera being provided on an upper side the display and capturing images of the target from the upper side.

### [Supplementary Note 16]

The information processing apparatus according to any one of Supplementary Notes 3, 5 to 7, and 9 to 11, wherein the determination is based on information acquired from at least one of the left camera, the right camera, the upper camera, the monitoring camera, the reader, the reception unit, and the microphone.

This disclosure is allowed to be changed, if desired, without departing from the essence or spirit of this disclosure which can be read from the claims and the entire identification. An information processing apparatus, an information processing system, an information processing method, and a recording medium with such changes are also intended to be within the technical scope of this disclosure.

### Description of Reference Codes

1, 2, 3, 4, 6, 7, 8, 9 Information processing apparatus
D Display
L Left camera
R Right camera
U Upper camera
M Monitoring camera
LB Left plate member
RB Right plate member
UB Top plate
Re Reading unit
IN Reception unit
S Speaker
Mic Microphone
F Filter
211 Height determination unit
212 Image capture instruction unit
313, 413 Change unit
514 Belongings presence determination unit
515, 615, 815 Output control unit
Sen Odor sensor
Air Gas output unit
616 Suspicious person determination unit
617 Odor sensor control unit
618 Gas output control unit
719 Person presence determination unit
720 Communication unit
821 Self-propulsion control unit
T Transfer unit
SYS Information processing system
C Control apparatus
C1 Congestion determination unit
C2 Communication unit

## Claims

1. An information processing apparatus comprising:
a display;
a left camera that is provided on a left side of the display and that captures images of a target from the left side;
a right camera that is provided on a right side of the display and that captures images of the target from the right side;
an upper camera that is provided on an upper side the display and that captures images of the target from the upper side; and
a monitoring camera that is provided on the upper side the display and that monitors the target from the upper side.

2. The information processing apparatus according to claim 1, further comprising:
a left plate member that is provided on a left side of the left camera, and that prevents display contents of the display from being viewed by a person other than the target and prevents a person other than the target from being captured in the images captured by the right camera and the images captured by the upper camera;
a right plate member that is provided on a right side of the right camera, and that prevents the display contents of the display from being viewed by a person other than the target and prevents a person other than the target from being captured in the images captured by the left camera and the images captured by the upper camera;
a top plate that is provided below the display, that protrudes toward the target facing the display, and that has a reader on a top surface;
a reception unit that detects an instruction operation of the target in a space between the display and the target, and that receives an input of instructions to the information processing apparatus;
a speaker that outputs sound toward the target; and
a microphone that inputs sound emitted by the target.

3. The information processing apparatus according to claim 1 or 2, further comprising an image capture instruction unit:
that determines a height of a face of the target;
that instructs the left camera and the right camera to capture images of the face of the target, in response to the height of the face of the target being lower than a predetermined height; and
that instructs the upper camera to capture images of the face of the target, in response to the height of the face of the target being higher than the predetermined height.

4. The information processing apparatus according to claim 2, wherein the top plate is inclined at a predetermined angle or more relative to a horizontal plane.

5. The information processing apparatus according to claim 2 or 4, further comprising a change unit that determines a height of a face of the target and that changes at least one of a height, an angle, and a depth of the top plate.

6. The information processing apparatus according to claim 1 or 2, further comprising a change unit that determines a height of a face of the target and that changes at least one of a height, an angle, and a depth of at least one of the display, the left camera, the right camera, the upper camera, and the monitoring camera.

7. The information processing apparatus according to claim 2, further comprising a belongings information output unit that outputs information indicating the target and information indicating belongings of the target, in response to a determination that the belongings of the target are in a predetermined range including the information processing apparatus for more than a predetermined time.

8. The information processing apparatus according to claim 1 or 2, further comprising:
an odor sensor that detects a predetermined odor; and
an odor information output unit that outputs information indicating detection of the predetermined odor, in response to the odor sensor detecting the predetermined odor.

9. The information processing apparatus according to claim 8, further comprising:
a determination unit that determines whether or not the target is a suspicious person; and
an odor sensor control unit that enables an operation of the odor sensor, in response to a determination by the determination unit that the target is a suspicious person.

10. The information processing apparatus according to claim 8, further comprising:
a determination unit that determines whether or not the target is a suspicious person; and
a gas output unit that outputs gas, in response to a determination by the determination unit that the target is a suspicious person.

11. The information processing apparatus according to claim 1 or 2, further comprising an assist unit that assists in an operation of at least one of the target and the information processing apparatus, in response to a determination that the target is in a predetermined range including the information processing apparatus for more than a predetermined time.

12. The information processing apparatus according to claim 1 or 2, further comprising
a transfer unit that is enabled in a desired case,
the information processing apparatus being self-propelled by the transfer unit in the desired case.

13. An information processing system comprising:
a plurality of information processing apparatuses, each including:
a display;
a left camera that is provided on a left side of the display and that captures images of a target from the left side;
a right camera that is provided on a right side of the display and that captures images of the target from the right side;
an upper camera that is provided on an upper side the display and that captures images of the target from the upper side; and
a monitoring camera that is provided on the upper side the display and that monitors the target from the upper side, wherein
the display provided in the information processing apparatus in which a number of targets included in images captured by the monitoring camera is greater than a predetermined value, outputs information indicating the information processing apparatus in which the number of targets included in the images captured by the monitoring camera is less than the predetermined value.

14. An information processing method comprising:
determining a height of a face of a target;
instructing a left camera and a right camera to capture images of the face of the target, in response to the height of the face of the target being lower than a predetermined height, the left camera being provided on a left side of a display and capturing images of the target from the left side, the right camera being provided on a right side of the display and capturing images of the target from the right side; and
instructing an upper camera to capture images of the face of the target, in response to the height of the face of the target being higher than the predetermined height, the upper camera being provided on an upper side the display and capturing images of the target from the upper side.

15. A recording medium on which a computer program that allows a computer to execute an information processing method is recorded, the information processing method including:
determining a height of a face of a target;
instructing a left camera and a right camera to capture images of the face of the target, in response to the height of the face of the target being lower than a predetermined height, the left camera being provided on a left side of a display and capturing images of the target from the left side, the right camera being provided on a right side of the display and capturing images of the target from the right side; and
instructing an upper camera to capture images of the face of the target, in response to the height of the face of the target being higher than the predetermined height, the upper camera being provided on an upper side the display and capturing images of the target from the upper side.
